Europäisches Patentamt

European Patent Office

Office européen des brevets

(19)

(11) Numéro de publication : **0 034 863**
**B1**

(12) # FASCICULE DE BREVET EUROPÉEN

(45) Date de publication du fascicule du brevet :
**10.09.86**

(51) Int. Cl.⁴ : **G 01 N  5/00**, G 01 N 15/06

(21) Numéro de dépôt : **81200183.2**

(22) Date de dépôt : **18.02.81**

(54) **Perfectionnements aux procédés et aux dispositifs de mesure de la teneur en poussières des fluides gazeux.**

(30) Priorité : 25.02.80 BE 47089
03.04.80 BE 47121

(43) Date de publication de la demande :
**02.09.81 Bulletin 81/35**

(45) Mention de la délivrance du brevet :
**10.09.86 Bulletin 86/37**

(84) Etats contractants désignés :
**AT DE FR GB IT LU SE**

(56) Documents cités :
**WO-A-80 /007 47
BE-A- 882 639
DE-A- 2 327 444**

(73) Titulaire : **CENTRE DE RECHERCHES METALLURGI-
QUES CENTRUM VOOR RESEARCH IN DE METAL-
LURGIE Association sans but lucratif
Vereniging zonder winstoogmerk Rue Montoyer, 47
B-1040 Bruxelles (BE)**

(72) Inventeur : **Ramelot, Daniel
8, rue du Champay
B-4310 St-Nicolas (BE)**

(74) Mandataire : **Pirmolin, Guy Jean
CENTRE DE RECHERCHES METALLURGIQUES
Abbaye du Val Benoît 11, rue Ernest Solvay
B-4000 Liege (BE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à des perfectionnements aux procédés et aux dispositifs de mesure de la teneur en poussières des fluides gazeux. Elle est applicable, de façon particulièrement avantageuse, aux fumées produites au cours d'opérations telles que production d'agglomérés, de fonte, d'acier, de métaux non ferreux, de matières pulvérulentes telles que ciment, etc.

Il est bien connu que dans la plupart des opérations métallurgiques qui donnent lieu à émission de fumées, la teneur globale en poussières de celles-ci, de même que leur teneur en tel ou tel constituant solide ou gazeux est en relation avec l'évolution de ladite opération et peut, par sa mesure, renseigner l'opérateur sur cette évolution, ce qui lui permet de mieux la contrôler.

Parmi les moyens les plus usuellement utilisés actuellement pour déterminer la teneur en poussières de fumées en mouvement dans un conduit donné, on peut citer celui qui consiste à prélever dans ledit conduit, par voie isocinétique, et pendant un certain temps, un échantillon des fumées, auxquelles on fait successivement subir des opérations de filtrage, puis d'étuvage et enfin de pesée en laboratoire.

Cette méthode présente l'inconvénient d'une part, d'être lente, car elle ne permet que 5 à 6 mesures par jour, et d'autre part, de nécessiter des manipulations coûteuses à réaliser *in situ* au stade industriel. En sus, elle est nettement discontinue, et les résultats ne sont obtenus qu'après un délai minimum de vingt-quatre heures, ce qui ne permet pas d'agir efficacement au niveau du contrôle du processus.

Parmi les méthodes industrialisées d'estimation continue de la quantité de poussières, on peut citer deux méthodes principales, à savoir :

a. la mesure de l'encrassement du filtre par absorption d'un rayonnement radioactif, méthode encore discontinue et influencée en outre par la nature des poussières retenues par le filtre (composition chimique, granulométrie, ...),

b. la mesure par voie optique de l'atténuation d'un rayonnement (soit dans le spectre visible, soit dans l'infrarouge) par la fumée passant entre un émetteur et un récepteur de rayonnement. Cette méthode présente l'inconvénient important de n'être que qualitative (atténuation dépendant de la section des particules et non de leur volume).

On connaît par la DE-A-23 27 444 un dispositif pour la détermination gravimétrique semi-automatique de la teneur en poussières de fluides gazeux. Ce dispositif permet d'effectuer, pendant des périodes de durée déterminée répétées à intervalles réguliers, un prélèvement isocinétique d'échantillons du fluide gazeux à analyser. Ces échantillons sont ensuite conduits, en continu pendant leur période de prélèvement, de façon à passer à travers des moyens de filtrage, qui sont d'ailleurs renouvelés automatiquement après chaque mesure. Ce document ne révèle pas de mesure continue de la teneur pondérale en poussières de ces fluides gazeux.

A l'heure actuelle, il n'existe d'ailleurs pas, à la connaissance du demandeur, de méthode de mesure continue satisfaisante de la teneur pondérale en poussières de fluides gazeux tels que des fumées industrielles.

La présente invention a précisément pour objet un procédé continu de détermination de la teneur pondérale en poussières d'échantillons de fluides gazeux, tels que des fumées industrielles, prélevés en continu.

Le procédé qui fait l'objet de la présente invention, dans lequel on prélève en continu et de façon isocinétique un échantillon des fluides dont la teneur en poussières est à déterminer, et dans lequel les fluides prélevés sont conduits à passer au travers d'un filtre de façon continue pendant une durée déterminée répétée à intervalles réguliers, est caractérisé en ce que l'on pèse le filtre pendant ces intervalles, en ce que pendant la pesée du filtre on évacue les fluides prélevés par un conduit qui court-circuite le filtre en ce que l'on déduit des valeurs des pesées successives du filtre de plus en plus chargé, le poids en poussière relatif à chaque durée de prélèvement.

D'autre part, le débit de gaz prélevé ramené aux conditions normales (0 °C et 760 mm Hg) est également mesuré de manière continue. L'intégration de cette mesure durant chaque durée de prélèvement permet de calculer la teneur en poussières des fluides exprimée en g/m³. La mesure également continue de l'humidité des gaz au droit de l'organe déprimogène permet de corriger cette teneur pour l'exprimer en g/m³ de gaz sec.

Selon une variante intéressante du procédé de l'invention, entre le moment où l'on arrête une phase de prélèvement (où on arrête l'alimentation du filtre) et celui où l'on démarre l'opération de pesée, on fait passer au travers dudit filtre, pendant une courte durée, un gaz sec, neutre ou inerte, exempt de poussières (par exemple $N_2$), sous pression, et à une température supérieure à 100 °C (de préférence entre 150 °C et 200 °C), de façon à éliminer toute humidité sur la couche de poussières adhérant au filtre, ce qui permet, sans pratiquement perdre de temps, d'effectuer les différentes pesées, sur un matériau sec. Afin d'améliorer cette opération, le corps du filtre peut également être porté pendant une courte période à une température analogue (de préférence la même période et la même température).

Le procédé de l'invention, tel que décrit ci-dessus, permet d'effectuer des mesures de la teneur en poussières, de fumées déterminées, de façon ininterrompue (par exemple pendant 24 heures par jour et 7 jours/semaine), à raison par exemple d'une mesure tous les quarts d'heure. Ce résultat peut être obtenu également grâce au fait que l'on peut faire usage d'un filtre, à la fois très serré (ne laissant pas passer les poussières de diamètre supérieur à 1 μm) et de grande capacité (par exemple pouvant être utilisé sans difficulté pendant un temps très long, de l'ordre d'une semaine), avant de devoir être nettoyé ou remplacé, lequel remplacement est par ailleurs aussi simple que rapide.

La présente invention a également pour objet un dispositif pour la mise en œuvre du procédé ci-dessus décrit. Ce dispositif est défini à la revendication 3.

Avant d'en définir les caractéristiques, on va en décrire un mode de réalisation donné à titre d'exemple non limitatif, sur un schéma non à l'échelle.

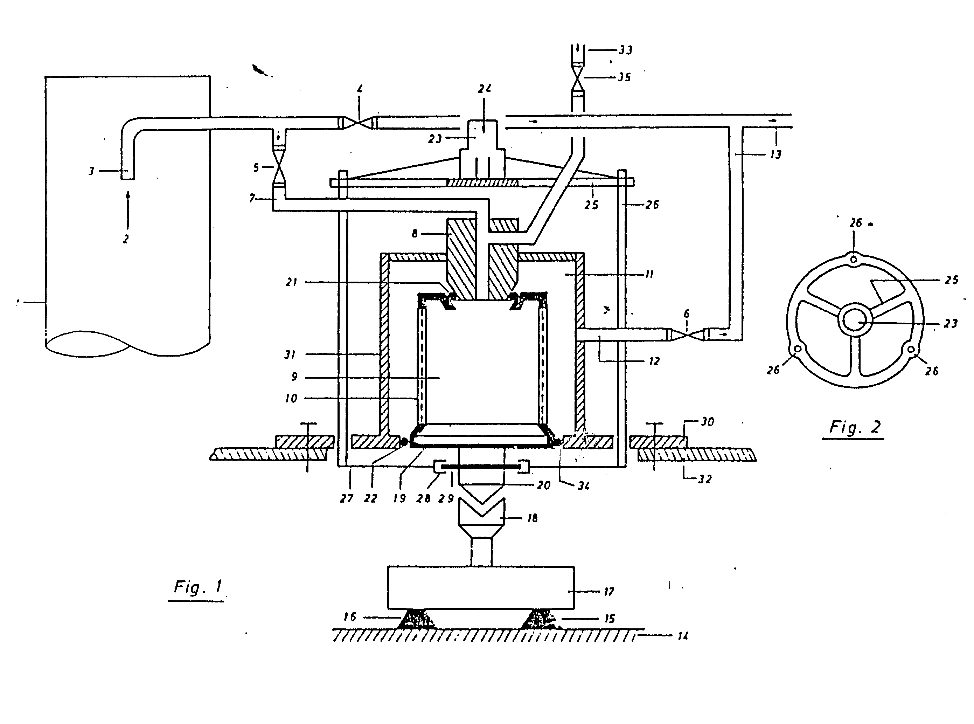

Sur ce schéma (fig. 1), le repère 1 représente la canalisation dans laquelle se déplacent les fumées dans le sens de la flèche 2, la prise de fumées est effectuée de manière isocinétique en 3. Pendant la phase de prélèvement, la vanne 4 est fermée, tandis que les vannes 5 et 6 sont ouvertes, les fumées parcourent alors le trajet suivant : vanne 5, raccord 7, embout 8, intérieur 9 du filtre 10, traversée du filtre 10 entrée dans l'enceinte 11, sortie par 12, vanne 6, canalisation d'évacuation 13. Pendant la phase de pesée, les vannes 5 et 6 sont fermées, tandis que la vanne 4 est ouverte, permettant aux fumées de s'échapper directement par 13.

Le dispositif de pesée est constitué de la façon suivante : reposant sur un socle 14 par l'intermédiaire de deux blocs amortisseurs 15-16, une balance électronique de précision 17 est munie à sa partie supérieure d'un embout profilé 18, destiné à supporter la masse à peser, en l'occurrence le filtre 10 chargé de poussières. Le filtre 10 fermé à sa partie inférieure 19 est muni de ce côté d'une broche 20, dont l'extrémité est profilée de façon à s'adapter à celle de l'embout 18. Le filtre 10 possède deux positions particulières, à savoir celle dans laquelle il est soumis à l'action des fumées (position représentée à la figure 1) et celle où il repose par son propre poids sur ledit embout 18.

Pendant la phase de passage des fumées, le filtre 10 est maintenu en place, de façon étanche, dans l'enceinte 11, par l'intermédiaire de deux joints toriques 21 et 2. De cette façon, les fumées pénétrant par 8 à l'intérieur 9 du filtre, n'en peuvent sortir qu'au travers de celui-ci.

Une fois que la phase de charge du filtre est terminée, un vérin 23 exerce une poussée dans le sens de la flèche 24 sur un cadre 25 (cfr. figure 2) relié par 3 tiges 26 à un disque de commande 27 muni d'une fourche circulaire 28. Cette fourche entraîne dans son mouvement le filtre 10 par l'intermédiaire d'un redan circulaire 29. Au cours du déplacement du filtre dans le sens de la flèche 24, celui-ci quitte le contact des deux joints toriques et repose par son propre poids sur l'embout 18, et cela grâce à un certain jeu ménagé entre fourche 28 et redan 29. Le boîtier 31 est solidaire de l'embout 8, de la sortie 12, il supporte les joints toriques 21 et 22, et est fixé de façon rigide à un châssis 32, par l'intermédiaire de sa base 30 pourvue d'une ouverture 34 dans laquelle est fixé le joint torique 22.

Une fois la phase de pesée terminée, le vérin 23 remonte en sens inverse de la flèche 24 et la fourche 28 soulevant le redan 29 remet le filtre 10 dans sa position correspondant au passage des fumées. On peut ajouter encore que juste après la fin de la période de passage des gaz, mais avant démarrage de la manœuvre pour la pesée, on souffle un court instant du gaz neutre sec, à température appropriée, par le conduit 33, vanne 35, dans l'embout 8, de façon à sécher parfaitement les poussières retenues par le filtre. A ce moment, les vannes 35 et 6 sont ouvertes, tandis que les vannes 4 et 5 sont fermées. Au point de vue technologique, le filtre est avantageusement constitué d'un cylindre de papier poreux approprié, cylindre enserré dans un grillage métallique à larges mailles, ceci afin d'éviter toute déchirure du papier.

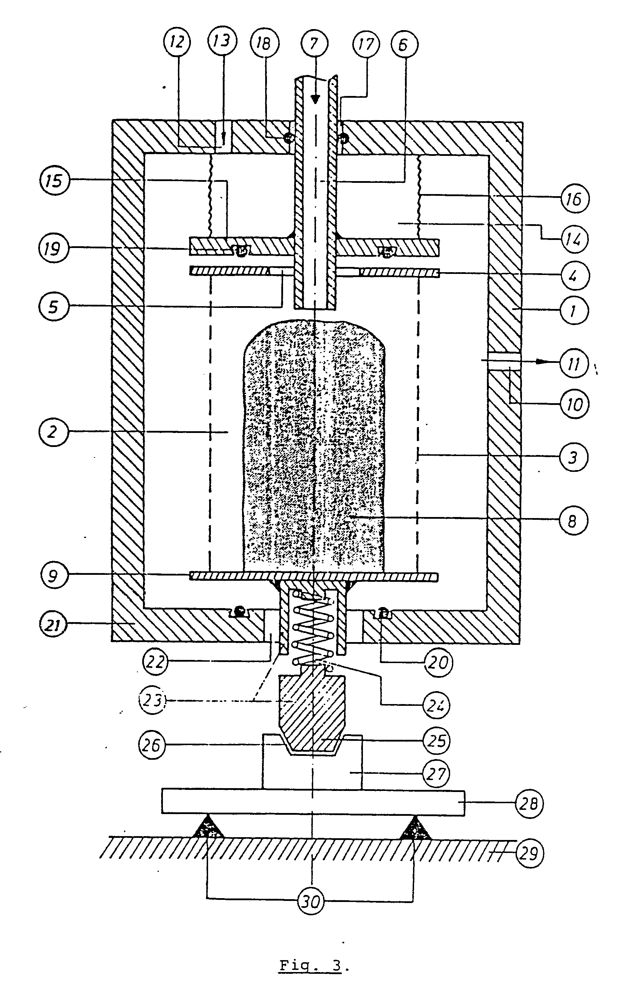

Suivant une variante de l'exemple de dispositif susdécrit, le déplacement de l'enceinte est réalisé d'une façon particulière. Suivant ce mode particulier, le dispositif comporte un boîtier 1 entourant une enceinte 2 en forme de cylindre, et dont la paroi latérale 3 est constituée d'un filtre. Côté entrée, le filtre comporte une base 4 pourvue d'un trou central 5 par lequel pénètre un fluide gazeux amené par le conduit 6 suivant la flèche 7. Après avoir été en contact avec le matériau 8 reposant dans l'enceinte 2 sur la base 9, le fluide traverse le filtre 3 et s'échappe du boîtier par 10, flèche 11. Le boîtier présente en outre une ouverture 12 par laquelle pénètre un gaz sous pression (flèche 13) remplissant une enceinte auxiliaire fermée 14 délimitée vers le bas par une base 15, latéralement par une paroi cylindrique étanche 16, dont la longueur est susceptible de varier, et vers le haut par la partie supérieure du boîtier entourant un trou 17 au travers duquel passe le tube 6, de façon étanche, grâce au joint torique 18. Un deuxième joint torique 19 solidaire de la face inférieure de la base 15 e toure le tube 6, tandis qu'un troisième joint torique 20 solidaire de la face interne 21 de la base du boîtier entoure un orifice 22 ménagé dans cette base. Les joints toriques sont logés dans des rainures trapézoïdales, qui les empêchent d'adhérer à l'enceinte lors de la phase de pesée, (cfr. figure 3).

La base 9 de l'enceinte 2 présente en son centre, à sa face inférieure, une broche 23 de longueur variable grâce à un ressort 24. La partie inférieure 25 de cette broche est profilée de façon à s'emboîter dans une cavité 26 ménagée dans un support 27 reposant sur une balance électronique 28 s'appuyant elle-même sur une assise fixe 29, par l'intermédiaire de deux semelles antivibratoires 30.

Le dispositif de cette variante fonctionne comme suit : en période de soufflage, l'enceinte 14 est mise sous pression par le gaz arrivant par 13, la base 15 se déplace vers le bas, jusqu'à ce que le joint torique 19 arrive au contact de la base 4, puis jusqu'à ce que l'enceinte 2 sous l'effet de la pression agissant toujours sur 15, vienne par sa base 9 au contact du joint torique inférieur 20. Le mouvement de la base 9 est rendu possible grâce au ressort 24. A ce moment, l'enceinte 2 est fermée de façon étanche et l'on y introduit le fluide gazeux par 7, pour s'échapper au travers du filtre après avoir abandonné les poussières 8. Une fois l'alimentation en fluide coupée, on coupe également la pression du gaz dans l'enceinte 14 dont la base 15 remonte, libérant l'enceinte 2 qui, sous l'action du ressort 24, remonte à son tour. A ce moment, la totalité de l'enceinte repose uniquement sur la balance 28, par l'intermédiaire de la broche 23 et la pesée peut se faire.

Suivant cette variante, le dispositif d'étanchéité du filtre dans le boîtier est réalisé au moyen de deux joints toriques disposés l'un entre l'entrée du filtre et la face inférieure de l'enceinte auxiliaire servant à l'amenée du fluide gazeux et l'autre entre l'extrémité fermée du filtre et une ouverture circulaire pratiquée dans le boîtier pour laisser passage à cette extrémité dudit filtre ou à son prolongement. Par cette disposition, les joints présentent l'avantage important de n'être soumis à aucun effort de torsion, de flexion ou de cisaillement, ce qui garantit une grande longévité, même à cadence de mesure élevée. En outre, la disposition illustrée les rend peu sensibles à l'encrassement par des dépôts de poussières.

Ayant ainsi décrit une réalisation possible du dispositif de l'invention, on peut maintenant en définir les caractéristiques essentielles.

Le dispositif, objet de la présente invention, comportant un filtre à poussières (20),

— des moyens pour prélever, de façon continue, un échantillon des fluides et conduire ces fluides jusqu'à l'entrée du filtre,

— un jeu de vannes disposées sur les conduits d'amenée des fluides au filtrage et sur les conduites d'évacuation de ceux-ci après filtrage, est caractérisé en ce que :

— le filtre à poussières est de forme cylindrique et présente un axe vertical, une extrémité dudit filtre étant fermée et l'autre raccordée à une conduite destinée à l'amenée et au prélèvement des fluides à filtrer, et en ce qu'il comporte :

— une enceinte pouvant entourer, de façon étanche, ledit filtre dans une position dite de prélèvement et comportant une canalisation pour évacuer les fluides filtrés,

— des moyens pour déplacer le filtre de la position dite de prélèvement à une position dite de pesée, dans laquelle le filtre n'est plus disposé de façon étanche dans la dite enceinte, mais repose par son propre poids sur un organe de pesée précise, disposée sous le filtre, lesdits moyens permettant de ramener le filtre dans sa position première de prélèvement, et

— un conduit court-circuitant le filtre (10) lors de la pesée de ce dernier et assurant l'évacuation des fluides prélevés.

Selon une modalité intéressante de ce dispositif, celui-ci comporte en outre un dispositif pour alimenter le filtre en un gaz neutre et sec, à une température supérieure à 100 °C, ainsi qu'un dispositif pour le chauffage (par exemple électrique) de l'enceinte de filtrage.

Selon une autre modalité intéressante de ce dispositif, l'organe de pesée précise est une balance de précision du type à indications cumulées et enregistrées en mémoire, et munie d'amortisseurs de vibration.

Il a également été trouvé avantageux de fixer l'extrémité de la conduite d'amenée des fumées dans la paroi de l'enceinte située côté entrée du filtre, ce qui simplifie la construction de l'ensemble, permet l'entrée des fumées à l'intérieur du filtre par sa base supérieure et sensiblement suivant son axe, et par voie de conséquence, oblige celles-ci à en sortir latéralement, en abandonnant leurs poussières.

Egalement suivant l'invention, le dispositif d'étanchéité du filtre dans l'enceinte est réalise au moyen de deux O-rings disposés l'un entre l'entrée du filtre et l'extrémité de sortie du conduit d'amenée des fumées à filtrer ou solidaire de cette extrémité et l'autre entre l'extrémité fermée du filtre et une ouverture circulaire pratiquée dans l'enceinte pour laisser passage à cette extrémité dudit filtre ou à son prolongement. Par ailleurs, il a été trouvé avantageux de pouvoir faire reposer le filtre sur la balance, par l'intermédiaire de son extrémité fermée.

Il existe de multiples façons de concevoir le dispositif ci-dessus défini, qui toutes rentrent dans le domaine de la présente invention, dès qu'elles en respectent les principes. Le dispositif ci-dessus décrit permet d'effectuer des mesures de teneurs en poussières de fumées de natures diverses, et cela de façon ininterrompue, à cadence élevée (par exemple une mesure par quart d'heure) et pendant une durée très longue (par exemple une semaine). Cet avantage est obtenu notamment grâce à l'emploi d'un filtre à grande capacité, permettant un très long service avant remplacement. Un tel filtre peut par exemple être constitué d'une feuille de papier poreux appropriée ou de cellulose entourée d'un treillis métallique de protection contre les déchirures éventuelles.

En résumé, le procédé se caractérise par l'utilisation d'un dispositif de pesée, extrêmement sensible, associé à des moyens électro-mécaniques ou électroniques assurant une séquence entièrement automatique et reproductible de pose et de dépose d'un élément filtrant sur le dispositif de pesée, à savoir :

— des moyens d'étanchéité entre le corps du filtre et l'élément filtrant, durant la phase de prélèvement des fumées,

— des moyens assurant le guidage du filtre et sa complète libération, lors des phases de pesée, en vue d'éviter toute contrainte mécanique pouvant fausser la mesure,

— des moyens d'amortissements mécanique, pneumatique, électrique, ainsi que des moyens temporisateurs pour éviter que l'on ne mesure des phénomènes transitoires,

— des moyens électroniques de visualisation des pesées effectuées et de calcul des grandeurs caractéristiques des fumées, notamment le taux de poussières en gr/Nm³ de celles-ci,

— des moyens de chauffage sélectif des conduites et du corps de filtre et d'isolation thermique du dispositif de pesée, en vue d'éliminer l'eau contenue dans les poussières à peser.

## Revendications

1. Procédé de mesure de la teneur pondérale en poussières des fluides gazeux, dans lequel on prélève en continu et de façon isocinétique un échantillon (2) des fluides dont la teneur pondérale en poussières est à déterminer, et dans lequel les fluides prélevés sont conduits à passer au travers d'un filtre (10) de façon continue pendant une durée déterminée répétée à intervalles réguliers, caractérisé en ce que l'on pèse le filtre (10) pendant ces intervalles, en ce que pendant la pesée du filtre on évacue les fluides prélevés par un conduit qui court-circuite le filtre, et en ce que l'on déduit des valeurs des pesées successives du filtre de plus en plus chargé, le poids en poussières relatif à chaque durée de prélèvement.

2. Procédé suivant la revendication 1, caractérisé en ce que, entre le moment où l'on arrête une phase de prélèvement (où l'on court-circuite l'alimentation du filtre) et celui où l'on démarre l'opération de pesée, on fait passer au travers dudit filtre, pendant une courte durée, un gaz sec, neutre ou inerte, exempt de poussières (par exemple N₂) sous pression et à une température supérieure à 100 °C (de préférence entre 150 °C et 200 °C), de façon à éliminer toute humidité sur la couche de poussières adhérant au filtre.

3. Dispositif de mesure de la teneur pondérale en poussières des fluides gazeux, comportant un filtre à poussières (10),

— des moyens pour prélever, de façon continue, un échantillon des fluides et conduire ces fluides jusqu'à l'entrée du filtre,

— un jeu de vannes (5, 6) disposées sur les conduites d'amenée des fluides au filtrage et sur les conduites d'évacuation de ceux-ci après filtrage, caractérisé en ce que

— le filtre à poussières (10) est de forme cylindrique et présente un axe vertical, une extrémité dudit filtre étant fermée et l'autre raccordée à une conduite destinée à l'amenée et au prélèvement des fluides à filtrer,

et en ce qu'il comporte

— une enceinte (11) pouvant entourer, de façon étanche, ledit filtre dans une position dite de prélèvement et comportant une canalisation (12) pour évacuer les fluides filtrés,

— des moyens pour déplacer le filtre (10) de la position dite de prélèvement à une position dite de pesée, dans laquelle le filtre n'est plus disposé de façon étanche dans ladite enceinte, mais repose par son propre poids sur un organe de pesée précise (17), disposée sous le filtre, lesdits moyens permettant de ramener ensuite le filtre dans sa position première de prélèvement, et

— un conduit court-circuitant le filtre (10) lors de la pesée de ce dernier et assurant l'évacuation des fluides prélevés.

4. Dispositif suivant la revendication 3, caractérisé en ce qu'il comporte en outre un dispositif pour alimenter le filtre en un gaz neutre et sec, à une température supérieure à 100 °C.

5. Dispositif suivant les revendications 3 et/ou 4, caractérisé en ce que l'organe de pesée précise est une balance de précision du type à indications cumulées et enregistrées en mémoire et munie d'amortisseurs de vibration.

6. Dispositif suivant l'une ou l'autre des revendications 3 à 5, caractérisé en ce que l'extrémité de la conduite d'amenée des fluides est fixée dans la paroi de l'enceinte, située côté entrée du filtre, de façon à introduire les fluides dans le filtre, par une de ses bases, et sensiblement suivant son axe.

7. Dispositif suivant l'une ou l'autre des revendications 3 à 6, caractérisé en ce que le dispositif d'étanchéité du filtre dans l'enceinte est réalisé au moyen de deux joints toriques disposés l'un entre l'entrée du filtre et l'extrémité de sortie du conduit d'amenée des fumées à filtrer ou solidaire de cette extrémité et l'autre entre l'extrémité fermée du filtre et une ouverture circulaire pratiquée dans l'enceinte, pour laisser passage, à cette extrémité dudit filtre ou à son prolongement.

8. Dispositif suivant les revendications 3 à 7, caractérisé en ce qu'il comporte en outre des moyens de mesure du débit instantané des gaz prélevés et de calcul du volume des gaz prélevés correspondant à chaque période de prélèvement.

## Claims

1. Process for measuring the dust content by weight of gaseous fluids, in which a sample (2) of the fluids, of which the dust content by weight is to be determined, is extracted continuously and isokinetically, and in which the extracted fluids are passed through a filter (10) continuously for a specific period repeated at regular interval, characterized in that the filter (10) is weighed during these intervals, in that, during the weighing of the filter, the extracted fluids are discharged through a pipe which bypasses the filter, and in that the weight of dust relating to each extraction period is deduced from the values of the successive weighings of the increasingly laden filter.

2. Process according to Claim 1, characterized in that, between the moment when an extraction phase is stopped (when the supply to the filter is bypassed) and the moment when the weighing operation is started, a dustfree, dry, neutral or inert gas (for example N₂) is passed through the said filter for a short time under pressure and at a temperature above 100 °C (preferably between 150 °C and 200 °C), to eliminate any moisture in the layer of dust adhering to the filter.

3. Apparatus for measuring the dust content by

weight of gaseous fluids, comprising a dust filter (10), means of continuously extracting a sample of the fluids and of conveying these fluids to the inlet of the filter, and a set of valves (5, 6) arranged on the pipes delivering the fluids for filtering and on the pipes discharging them after filtering, characterized in that :

the dust filter (10) is cylindrical and has a vertical axis, one end of the said filter being closed and the other being connected to a pipe intended for delivering and extracting the fluids to be filtered, and in that it possesses :

an enclosure (11) which can surround the said filter in a sealed manner in a so-called extraction position and which has a channel (12) for discharging the filtered fluids,

means of shifting the filter (10) from the socalled extraction position into a so-called weighing position, in which the filter is no longer arranged in a sealed manner in the said enclosure, but rests by its own weight on a precision weighing device (17) arranged under the filter, the said means making it possible subsequently to return the filter to its first extraction position, and

a pipe bypassing the filter (10) during the weighing of the latter and ensuring the discharge of the extracted fluids.

4. Apparatus according to Claim 3, characterized in that it also possesses a device for supplying the filter with a dry neutral gas at a temperature above 100 °C.

5. Apparatus according to Claims 3 and/or 4, characterized in that the precision weighing device is a precision balance of the type with cumulative readings recorded in a memory and equipped with vibration dampers.

6. Apparatus according to any one of Claims 3 to 5, characterized in that the end of the fluid delivery pipe is fastened in the wall of the enclosure located on the inlet side of the filter, so as to introduce the fluids into the filter via one of its bases and substantially along its axis.

7. Apparatus according to any one of Claims 3 to 6, characterized in that the device sealing the filter in the enclosure is produced by means of two O-rings, one arranged between the filter inlet and the outlet end of the pipe delivering the smoke to be filtered or integral with this end and the other arranged between the closed end of the filter and a circular orifice made in the enclosure, to allow the said filter or its extension to pass to this end.

8. Apparatus according to Claims 3 to 7, characterized in that it also has means of measuring the instantaneous flow of extracted gases and of calculating the volume of extracted gases corresponding to each extraction period.

## Patentansprüche

1. Verfahren zur Messung des Staubgewichtsanteils in Gasströmen, wobei man kontinuierlich und auf isokinetische Weise eine Probe (2) der Ströme, deren Staubgewichtsanteil bestimmt werden soll, nimmt und wobei die entnommenen Ströme kontinuierlich für einen in regelmässigen Abständen wiederholten Zeitraum durch ein Filter (10) geführt werden, dadurch gekennzeichnet, dass man das Filter (10) während dieser Zeiträume wägt, während des Wägens des Filters die entnommenen Ströme über eine das Filter kurzschliessende Leitung abzieht und die Staubgewichte für jeden Entnahmezeitraum aus den Werten der aufeinanderfolgenden Wägungen des mehr und mehr beladenen Filters herleitet.

2. Verfahren nach Anspruch 1, dadurch gekennzeichnet, dass man zwischen dem Moment, wenn eine Entnahmephase beendet wird (bzw. die Filterzufuhr kurzgeschlossen wird), und dem Moment, wenn man den Wägevorgang beginnt, für eine kurze Zeit ein trockenes, neutrales oder inertes, staubfreies Gas (zum Beispiel N₂) unter Druck und bei einer Temperatur über 100 °C (vorzugsweise zwischen 150 °C und 200 °C) durch besagtes Filter leitet, um jegliche Feuchtigkeit auf der dem Filter anhaftenden Staubschicht zu beseitigen.

3. Apparat zur Messung des Staubgewichtsanteils in Gasströmen, bestehend aus einem Staubfilter (10), Vorrichtungen zur kontinuierlichen Entnahme einer Probe der Ströme und zu deren Weiterleitung bis zum Filtereingang, und einem Satz Ventile (5, 6), die auf den Zufuhrleitungen für die Ströme zur Filtration und auf deren Abzugsleitungen nach der Filtration angeordnet sind, dadurch gekennzeichnet, dass :

— das Staubfilter (10) eine zylindrische Form und eine vertikale Achse aufweist, wobei ein Ende des Filters geschlossen und das andere mit einer zum Einlass und Auslass der zu filtrierenden Ströme bestimmten Leitung verbunden ist, und dasses besteht aus :

— einer Hülle (11), die dieses Filter in einer sogenannten Entnahmestellung dichtend umgeben kann und eine Leitung (12) zum Abziehen der filtrierten Ströme aufweist,

— Mitteln zum Umstellen des Filters (10) aus der sogenannten Entnahmestellung in eine sogenannte Wägestellung, in der das Filter nicht mehr dichtend in besagter Hülle angeordnet ist, sondern unter seinem Eigengewicht auf einer unter dem Filter angeordneten, Präzisionswägeeinrichtung (17) ruht, wobei diese Mittel es zulassen, das Filter nachher in seine erste Entnahmestellung zurückzubringen, und

— einer Leitung zum Kurzschliessen des Filters (10) während dessen Wägung und zum Sicherstellen des Abziehens der entnommenen Ströme.

4. Apparat nach Anspruch 3, dadurch gekennzeichnet, dass er ferner eine Einrichtung zum Zuführen eines neutralen und trockenen Gases zum Filter bei einer Temperatur über 100 °C aufweist.

5. Apparat nach Anspruch 3 und/oder 4, dadurch gekennzeichnet, dass die Präzisionswägevorrichtung eine Präzisionswaage mit kumulativer Anzeige und Speichereingabe sowie Schwingungsdämpfern ist.

6. Apparat nach einem der Ansprüche 3 bis 5, dadurch gekennzeichnet, dass das Leitungsende für die Zufuhr der Ströme in der am Filtereingang liegenden Hüllenwand befestigt ist, um die Ströme in das Filter durch eines von dessen Unterteilen und im wesentlichen entlang dessen Achse einzuleiten.

7. Apparat nach einem der Ansprüche 3 bis 6, dadurch gekennzeichnet, dass die das Filter dichtende Vorrichtung in der Hülle durch zwei O-Ringdichtungen gebildet wird, von denen eine zwischen dem Filtereingang und dem Ausgangsende der Zufuhrleitung für den zu filtrierenden Rauch angeordnet oder mit diesem Ende einstückig ist und die andere zwischen dem geschlossenen Ende des Filters und einer in der Hülle angebrachten, kreisförmigen Oeffnung liegt, um an diesem Ende für besagtes Filter oder dessen Verlängerung einen Durchgang frei zu lassen.

8. Apparat nach einem der Ansprüche 3 bis 7, dadurch gekennzeichnet, dass er ferner ein Gerät zum Messen der momentanen Menge der entnommenen Gase und zur Berechnung des jeder Entnahmeperiode entsprechenden Gasvolumens aufweist.

Fig. 2

Fig. 1

Fig. 3.